# FASCICULE DE BREVET EUROPEEN

(11) **EP 3 317 803 B1**
(45) Date de publication et mention de la délivrance du brevet: **14.09.2022**
(21) Numéro de dépôt: 16734348.2
(22) Date de dépôt: 30.06.2016
(51) Int. Cl.: G06F 21/74, G06F 21/53

(54) **PROCÉDÉ ET SYSTÈME D'EXÉCUTION SÉCURISÉE DE MACHINES VIRTUELLES PAR UN ENSEMBLE DE DISPOSITIFS PROGRAMMABLES INTERCONNECTÉS**
VERFAHREN UND SYSTEM ZUM SICHEREN AUSFÜHREN VON VIRTUELLEN MASCHINEN BEI MEHREREN VERBUNDENEN GERÄTEN
METHOD AND SYSTEM FOR SECURE VIRTUAL MACHINES EXECUTION BY A PLURALITY OF CONNECTED DEVICES

(30) Priorité: 02.07.2015 FR 1556258
(43) Date de publication de la demande: 09.05.2018
(73) Titulaire: Viaccess, 92057 Paris La Défense Cedex (FR)
(72) Inventeur: SANCHEZ LEIGHTON, Vicente, 35000 Rennes (FR)
(74) Mandataire: Lavoix
(86) Numéro de dépôt international: PCT/EP2016/065342
(87) Numéro de publication internationale: WO 2017/001580

(56) Documents cités:
- US-A1- 2014 040 886
- CHAI HONGFENG ET AL: "TEEI - A Mobile Security Infrastructure for TEE Integration", 2014 IEEE 13TH INTERNATIONAL CONFERENCE ON TRUST, SECURITY AND PRIVACY IN COMPUTING AND COMMUNICATIONS, IEEE, 24 septembre 2014 (2014-09-24), pages 914-920, XP032724983, DOI: 10.1109/TRUSTCOM.2014.121

## Description

La présente invention concerne un procédé d'exécution sécurisée de machines virtuelles par un ensemble de dispositifs programmables interconnectés, chaque dispositif programmable comportant au moins un processeur de calcul, et un système d'exécution sécurisée de machines virtuelles associé.

L'invention se situe dans le domaine de l'exécution sécurisée de machines virtuelles, et trouve une application particulière dans l'exécution de machines virtuelles dans un système centralisé de traitement de données.

L'exécution sécurisée de certaines applications informatiques, dites critiques, est un enjeu important, dans de nombreux contextes industriels et commerciaux.

L'exécution sécurisée d'une application informatique, assurant un certain niveau de sécurité et de robustesse vis-à-vis de diverses attaques de piratage, par un ensemble de ressources matérielles, implique un partitionnement matériel ou logiciel des ressources matérielles pour effectuer une séparation entre un environnement d'exécution de niveau de sécurité normal ou standard et un environnement d'exécution sécurisé.

La séparation logicielle est effectuée, de manière connue, par un mécanisme d'hyperviseur ou VMM (pour « Virtual Machine Monitor » en anglais). Grâce à un tel mécanisme, des applications différentes peuvent être exécutées dans des environnements mémoire isolés les uns des autres de la portion matérielle de niveau de sécurité standard d'un processeur.

On connaît par ailleurs des architectures de cloisonnement matériel, par exemple l'architecture TrustZone ^{®} de la société ARM ^{®} qui fournit un processeur pourvu d'une portion ou enclave matérielle sécurisée, cloisonnée par rapport à une portion matérielle de niveau de sécurité standard, plus faible que le niveau dit sécurisé. Ce cloisonnement se traduit par la capacité du processeur de basculer d'un mode normal à un mode sécurisé pour lequel des ressources matérielles sont isolées physiquement du mode normal. Ces ressources matérielles isolées sont par exemple de la mémoire, des ressources réseaux, des accélérateurs cryptographiques. De même, le niveau de privilège et les instructions autorisées à l'exécution par le processeur sont distincts selon le mode normal ou le mode sécurisé.

Dans la suite de la description, on parlera respectivement de portion matérielle de niveau de sécurité standard et de portion matérielle sécurisée, pour désigner l'ensemble des ressources matérielles mises en œuvre dans le mode normal et dans le mode sécurisé dudit processeur. Le basculement du mode normal au mode sécurisé se fait sur requête du mode normal à l'aide d'une instruction spécifique ou lors d'une interruption matérielle issue d'une des ressources matérielles attachées au mode sécurisé.

La prise en charge de la requête à l'issue du basculement du mode normal au mode sécurisé est réalisée par un micrologiciel de pilotage du processeur (ou « firmware » en anglais). Ce micrologiciel est à distinguer du microcode du processeur qui n'est pas accessible et qui définit par ailleurs le jeu d'instructions du processeur.

Ce micrologiciel est aussi exécuté au démarrage (ou « boot » en anglais) du processeur qui s'effectue en mode sécurisé de telle sorte qu'une chaîne de confiance soit établie dès le début. A l'issue de la séquence de démarrage, le micrologiciel initie le démarrage dans le monde normal. Le micrologiciel est constitué de séquence d'instructions du processeur de niveau de privilège parmi les plus élevés.

Par exemple, dans le cas de processeurs d'architecture ARM v8 ^{®}, le micrologiciel de pilotage du processeur permet d'utiliser une instruction donnée, appelée SMC pour « Secure Monitor Call », qui permet à une application exécutée dans la portion de niveau de sécurité standard du processeur, de passer des paramètres d'exécution pour requérir l'exécution d'au moins une instruction, dite critique, de cette application par la portion matérielle sécurisée du processeur.

Il existe également d'autres architectures fournissant des fonctionnalités similaires, tel SGX ^{®} de Intel ^{®}, dans le contexte duquel les niveaux de privilèges sont appelés anneaux de protection, ou « CPU privilege rings » en anglais.

Une telle architecture assure l'exécution, ainsi dite sécurisée, d'au moins une instruction critique, d'une application, dans un environnement d'exécution isolé dans la portion sécurisée du processeur, appelé Trusted Execution Environment (TEE).

L'application exécutée au sein du TEE (parfois appelée « trustlet ») est composée de plusieurs séquences d'instructions, qui selon la conception du code (découpage en plusieurs tâches d'exécution ou « threads » en anglais) sont éventuellement exécutées sur plusieurs cœurs de processeurs en parallèle au sein d'un même TEE.

Lorsque plusieurs machines virtuelles, chacune comportant un système d'exploitation ou OS (pour « Operating System » en anglais) exécutent sur un même processeur une ou plusieurs applications, se pose un problème de partage de la portion matérielle sécurisée du processeur permettant des exécutions isolées les unes des autres des applications de chacune des machines virtuelles. Dans ce cas, en effet, la séparation assurée par l'hyperviseur dans la portion de sécurité standard du processeur, n'est pas assurée au sein de la portion sécurisée.

En outre, l'utilisation d'ensembles de serveurs de stockage et de calcul, à distance, par de nombreuses machines virtuelles clientes, appelée « cloud computing », est de plus en plus courante. Dans un tel contexte, de nombreuses machines virtuelles cherchent à accéder aux ressources matérielles mises à disposition. En général, ces machines virtuelles appartiennent à divers propriétaires. Le problème d'une possibilité d'exécution sécurisée, et notamment le problème mentionné ci-dessus, est crucial dans un tel contexte.

Pour résoudre ce dernier problème, la demande de brevet US2009/0204964 A1 propose une plateforme virtuelle sécurisée distribuée, mettant en œuvre une architecture à hyperviseur sécurisé. L'architecture propose une virtualisation logique de modules TPM, qui sont des composants matériels cryptographiques. Les solutions basées sur ces composants sont vulnérables à certains types d'attaques. Ils permettent en effet de vérifier l'intégrité des applications chargées pour être exécutées, mais n'assurent pas d'isolation matérielle de leurs exécutions. En alternative, les modules de sécurité matériels, ou HSM, pour « hardware security modules », en anglais, nécessitent des unités de traitement dédiées. De plus, ces modules sont coûteux.

L'article « TEEEI - A Mobile Security Infrastructure for TEE Intégration » de Hongfeng Chai et al, publié en 2014 dans IEEE 13th International Conférence on Trust, Security and Privacy in Computing and Communications, décrit une infrastructure d'exécution sécurisée intégrant de multiples TEEs (« *trusted execution environment* »)*.*

Le document US2014/0040886 est une demande de brevet dans le domaine de l'exécution sécurisée utilisant plusieurs machines virtuelles.

L'invention a pour objectif de remédier à ces inconvénients des solutions connues, en proposant une solution plus sûre et moins coûteuse pour l'exécution sécurisée d'applications en provenance de machines virtuelles multiples mises en œuvre par une pluralité de dispositifs programmables interconnectés.

A cet effet, l'invention propose un procédé d'exécution sécurisée de machines virtuelles par un ensemble de dispositifs programmables interconnectés, chaque dispositif programmable comportant au moins un processeur de calcul comportant un ou plusieurs cœurs, chaque dispositif programmable étant apte à exécuter simultanément et/ou successivement des applications d'une pluralité de machines virtuelles, chaque processeur comportant une portion matérielle d'exécution de niveau de sécurité standard et une portion matérielle sécurisée de niveau de sécurité supérieur au niveau de sécurité standard, lesdites portions matérielles étant cloisonnées.

Ce procédé comporte les étapes suivantes :
- mémorisation d'au moins un environnement d'exécution sécurisé associé à chaque machine virtuelle, chaque environnement d'exécution sécurisé comportant au moins une instruction d'une application associée,
- sur requête d'exécution sécurisée d'au moins une suite d'instructions d'une application par une machine virtuelle requérante, la machine virtuelle requérante étant implémentée sur une portion matérielle d'exécution de niveau de sécurité standard d'un processeur, ladite requête étant transmise à un module de contrôle sécurisé implémenté dans la portion matérielle sécurisée dudit processeur,
   - allocation à ladite exécution sécurisée d'au moins une portion matérielle sécurisée disponible appartenant à l'un des processeurs de l'ensemble de dispositifs programmables interconnectés, comportant une transmission de ladite requête d'exécution sécurisée, par ledit module de contrôle sécurisé à un autre module de contrôle sécurisé implémenté dans la portion matérielle sécurisée d'un autre processeur de l'ensemble de dispositifs programmables interconnectés, chacun desdits modules de contrôle sécurisé mettant en œuvre des mécanismes d'adressage et de routage des requêtes d'exécution sécurisée,
   - chargement de l'environnement d'exécution sécurisé associé à ladite machine virtuelle requérante dans ladite au moins une portion matérielle sécurisée allouée,
   - utilisation de la portion matérielle sécurisée allouée pour l'exécution sécurisée de ladite suite d'instructions de l'application de la machine virtuelle requérante, l'utilisation d'une portion matérielle sécurisée allouée pour l'exécution sécurisée d'au moins une instruction de l'application d'une première machine virtuelle requérante étant exclusive, à un instant donné, de toute utilisation de ladite portion matérielle sécurisée pour l'exécution sécurisée d'au moins une instruction de l'application d'une deuxième machine virtuelle requérante.

Avantageusement, l'invention permet d'utiliser successivement des portions matérielles sécurisées des processeurs de dispositifs programmables interconnectés, par diverses machines virtuelles, de manière distribuée, tout en assurant le cloisonnement matériel des exécutions. De plus, l'invention permet l'exploitation des portions sécurisées qui ne sont pas utilisées par les applications situées dans les portions matérielles de niveau de sécurité standard respectives au sein d'un même processeur.

Le procédé d'exécution sécurisée de machines virtuelles selon l'invention peut présenter une ou plusieurs des caractéristiques ci-dessous, prises indépendamment ou selon toutes combinaisons techniques acceptables :
La portion matérielle sécurisée comprend des ressources mémoire et le procédé comporte, avant le chargement de l'environnement d'exécution sécurisé, une étape de nettoyage desdites ressources mémoire.

La portion matérielle sécurisée comprend au moins un périphérique, et le procédé comporte, avant le chargement de l'environnement d'exécution sécurisé, une étape de nettoyage de chaque périphérique.

Le procédé comprend en outre un chiffrement de l'environnement d'exécution sécurisé après l'exécution sécurisée de ladite suite d'instructions de l'application de la machine virtuelle requérante, et une mémorisation de l'environnement d'exécution sécurisé chiffré.

Après la requête d'exécution sécurisée d'au moins une suite d'instructions d'une application, le procédé comprend au moins une étape d'évaluation de ressources matérielles nécessaires pour l'environnement d'exécution sécurisé associé à ladite machine virtuelle requérante, et de calcul d'un nombre de portions matérielles sécurisées à allouer pour l'exécution de l'application sécurisée dans l'environnement d'exécution sécurisé associé.

Après requête d'exécution sécurisée d'au moins une suite d'instructions d'une application, le procédé comprend une étape de calcul d'une priorité de séquencement d'exécution sécurisée des requêtes d'exécution.

L'évaluation de ressources matérielles comprend une évaluation de complexité de calcul et/ou de quantité de mémoire et/ou de nombre de cœurs d'exécution.

Le procédé comprend, pour une pluralité de requêtes d'exécution en provenance d'une pluralité de machines virtuelles requérantes, une mise en œuvre distribuée d'un algorithme d'ordonnancement pour l'utilisation de groupes de portions matérielles sécurisées par les environnements d'exécution sécurisés associés aux machines virtuelles requérantes.

L'utilisation d'une portion matérielle sécurisée allouée pour l'exécution sécurisée d'au moins une instruction de l'application d'une première machine virtuelle requérante est exclusive, à un instant donné, de toute utilisation de ladite portion matérielle sécurisée pour l'exécution sécurisée d'au moins une instruction de l'application d'une deuxième machine virtuelle requérante.

Selon un autre aspect, l'invention propose un système d'exécution sécurisée de machines virtuelles par un ensemble de dispositifs programmables interconnectés, chaque dispositif programmable comportant au moins un processeur de calcul comportant un ou plusieurs cœurs, chaque dispositif programmable étant apte à exécuter simultanément et/ou successivement des applications d'une pluralité de machines virtuelles, chaque processeur comportant une portion matérielle d'exécution de niveau de sécurité standard et une portion matérielle sécurisée de niveau de sécurité supérieur au niveau de sécurité standard, lesdites portions matérielles étant cloisonnées.

Chaque processeur comporte des modules de micrologiciel de pilotage dudit processeur et adaptés à:
- mémoriser un environnement d'exécution sécurisé associé à chaque machine virtuelle, chaque environnement d'exécution sécurisé comportant au moins une instruction d'une application associée,
- sur requête d'exécution sécurisée d'au moins une suite d'instructions d'une application par une machine virtuelle requérante, la machine virtuelle requérante étant implémentée sur une portion matérielle d'exécution de niveau de sécurité standard dudit processeur, ladite requête étant transmise à un module de contrôle sécurisé implémenté dans la portion matérielle sécurisée dudit processeur,
   - allouer à ladite exécution sécurisée au moins une portion matérielle sécurisée disponible appartenant à l'un des processeurs de l'ensemble de dispositifs programmables interconnectés, comportant une transmission de ladite requête d'exécution sécurisée, par ledit module de contrôle sécurisé, à un autre module de contrôle sécurisé implémenté dans la portion matérielle sécurisée d'un autre processeur de l'ensemble de dispositifs programmables interconnectés, chacun desdits modules de contrôle sécurisé mettant en œuvre des mécanismes d'adressage et de routage des requêtes d'exécution sécurisée,
   - charger l'environnement d'exécution sécurisé associé à ladite machine virtuelle requérante dans ladite au moins une portion matérielle sécurisée allouée,
   - utiliser la portion matérielle sécurisée allouée pour l'exécution sécurisée de ladite suite d'instructions de l'application de la machine virtuelle requérante, l'utilisation d'une portion matérielle sécurisée allouée pour l'exécution sécurisée d'au moins une instruction de l'application d'une première machine virtuelle requérante étant exclusive, à un instant donné, de toute utilisation de ladite portion matérielle sécurisée pour l'exécution sécurisée d'au moins une instruction de l'application d'une deuxième machine virtuelle requérante.

Selon un mode de réalisation, le système d'exécution sécurisée de machines virtuelles comporte des ressources mémoire partagées, et un module de chiffrement apte à chiffrer l'environnement d'exécution sécurisé après l'exécution sécurisée de ladite au moins une instruction de l'application de la machine virtuelle requérante, et à sauvegarder l'environnement d'exécution sécurisé chiffré dans les ressources mémoire partagées.

Selon un autre aspect, l'invention concerne un produit programme d'ordinateur comportant des instructions de micrologiciel qui, lorsqu'elles sont mises en œuvre par un ou plusieurs processeurs de calcul de dispositifs programmables, chaque processeur de calcul comportant un ou plusieurs cœurs, chaque dispositif programmable étant apte à exécuter simultanément et/ou successivement des applications d'une pluralité de machines virtuelles, chaque processeur comportant une portion matérielle d'exécution de niveau de sécurité standard et une portion matérielle sécurisée de niveau de sécurité supérieur au niveau de sécurité standard, lesdites portions matérielles étant cloisonnées, mettent en œuvre un procédé tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :
- la figure 1 représente schématiquement un système centralisé de traitement de données ;
- la figure 2 illustre schématiquement un mode de réalisation d'un processeur d'un dispositif programmable dans un mode de réalisation de l'invention ;
- la figure 3 illustre schématiquement un mode de réalisation avec dispositifs programmables interconnectés ;
- la figure 4 est un organigramme des principales étapes d'un procédé d'exécution sécurisée de machines virtuelles selon un mode de réalisation de l'invention ;
- la figure 5 est un organigramme de mise en œuvre de l'étape d'allocation distribuée de portions matérielles sécurisées selon un mode de réalisation de l'invention.

L'invention sera décrite dans son application dans un système centralisé de traitement de données comportant des ensembles de dispositifs programmables interconnectés, utilisables par une pluralité de machines virtuelles clientes.

Néanmoins, l'invention n'est pas limitée à ce cas d'application, et trouve une application dans tout système d'exécution d'applications en provenance d'une pluralité de machines virtuelles.

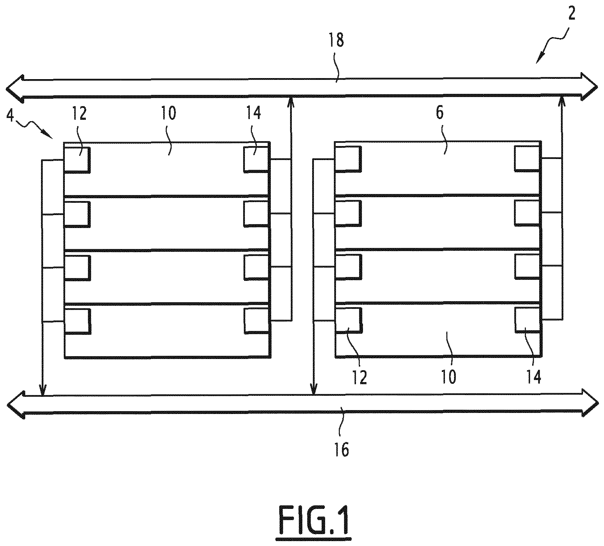

La figure 1 illustre schématiquement un système centralisé de traitement 2, comprenant dans l'exemple deux ensembles 4, 6 de dispositifs programmables 10 interconnectés. Chaque dispositif programmable 10 comprend deux modules d'interface de connexion réseau respectifs, notés 12 et 14, un premier module d'interface 12 permettant la connexion à un réseau de communication public 16 et un deuxième module d'interface 14 permettant la connexion à un réseau d'administration 18, permettant la mise en œuvre de communications sécurisées.

Le réseau de communication public 16 est par exemple le réseau client des fournisseurs du système centralisé de traitement (ou cloud), permettant aux machines virtuelles de leurs clients de se connecter entre elles et avec le réseau de communication Internet.

Dans une application de traitement centralisé de données, chacun des dispositifs programmables 10 fonctionne en mode virtualisé, exécutant plusieurs machines virtuelles de clients différents. On parle d'occupation multiple ou « multi-tenancy » en anglais.

Afin de permettre une exécution sécurisée d'applications par ces machines virtuelles, de préférence, chaque dispositif programmable est équipé d'un ou plusieurs processeurs, ayant un ou plusieurs cœurs de calcul, et permettant de réaliser une exécution sécurisée matériellement.

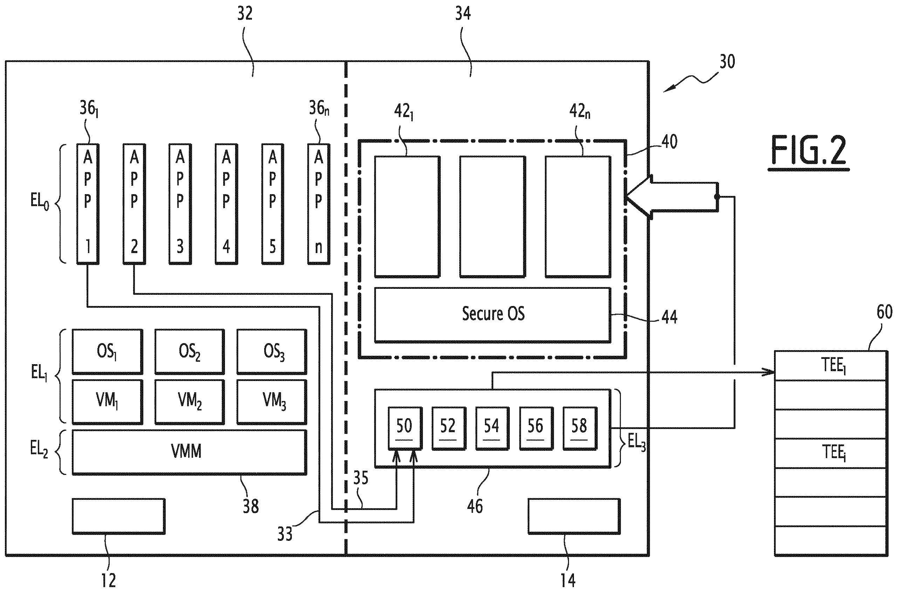

La figure 2 illustre un mode de réalisation préféré dans lequel chaque processeur 30 de dispositif programmable comporte deux portions matérielles distinctes 32 et 34 correspondant respectivement à la portion matérielle de niveau de sécurité standard et à la portion matérielle sécurisée.

La portion matérielle 32 est de niveau de sécurité standard, utilisé pour un fonctionnement classique. La portion matérielle 34 est une portion matérielle sécurisée, de niveau de sécurité supérieur au niveau de sécurité standard. Ces deux portions sont cloisonnées entre elles, et l'accès à la portion matérielle sécurisée 34 se fait par des requêtes 33, 35 dédiées.

Chacune des portions matérielles en lien avec leur mode d'exécution respectifs met en œuvre plusieurs niveaux de privilège d'exécution : un niveau de privilège utilisateur (inférieur) EL₀, et un ou plusieurs niveaux de privilège intermédiaires (EL₁ et EL₂ dans notre exemple), pour l'exécution d'un système d'exploitation, de l'hyperviseur et enfin un niveau de privilège supérieur (EL₃ dans notre exemple) pour le micrologiciel de pilotage dans le mode sécurisé.

Par exemple, dans le cas où le processeur utilisé est d'architecture ARM v8 ^{®}, on dispose d'un niveau de privilège utilisateur EL0, dans les deux modes, d'un niveau de privilège supérieur EL1 dans les deux modes, pour l'exécution d'un système d'exploitation, un niveau de privilège supérieur EL2, seulement dans le mode standard pour l'hyperviseur et un niveau de privilège maximum EL3, seulement dans le mode sécurisé.

Ainsi, des applications utilisateur 36₁ à 36ₙ sont exécutées au niveau de privilège EL₀, du mode standard, l'exécution étant supportée par un système d'exploitation et un environnement d'exécution.

Dans l'exemple de la figure 2, plusieurs applications utilisateur APP₁ à APPₙ sont considérées, ainsi que plusieurs systèmes d'exploitation OS₁ à OS₃, au niveau de privilège EL₁ du mode standard, chaque système d'exploitation étant associé à une machine virtuelle VM₁ à VM₃.

L'exécution des applications APP₁ à APPₙ des diverses machines virtuelles VM₁ à VM₃ est gérée par un hyperviseur ou VMM (pour « Virtual Machine Monitor » en anglais), noté 38 sur la figure 2, au niveau de privilège EL₂ du mode standard.

La portion matérielle sécurisée 34 est apte à mettre en œuvre un environnement d'exécution sécurisé 40, appelé également TEE pour « Trusted Execution Environment », et à exécuter des applications 42₁ à 42ₘ de manière cloisonnée, donc protégée par rapport à des tentatives de piratage éventuelles.

On parle d'exécution sécurisée et les applications 42₁ à 42ₘ exécutées de manière sécurisée sont également appelées « trustlets ». Un environnement d'exécution sécurisé 40 comprend également un système d'exploitation sécurisé 44, de niveau de privilège EL₁.

En d'autres termes, un TEE comprend un système d'exploitation et un contexte d'exécution d'une ou plusieurs applications à exécuter.

La portion matérielle sécurisée 34 comprend un module de contrôle sécurisé 46, de niveau de privilège EL₃ supérieur au niveau de privilège attribué au module 44, mettant en œuvre des instructions de code micrologiciel de pilotage de la portion matérielle sécurisée.

Selon un mode de réalisation, le micrologiciel de pilotage mis en œuvre par le module de contrôle sécurisé 46 est modifié par ajout d'instructions de code pour permettre, sur requête d'exécution sécurisée d'au moins une instruction d'une application APP₁ à APPₙ, d'une machine virtuelle requérante, en particulier en changeant le contexte mémoire visible de l'environnement d'exécution sécurisé, une utilisation distribuée des portions matérielles sécurisées des processeurs des dispositifs programmables interconnectés.

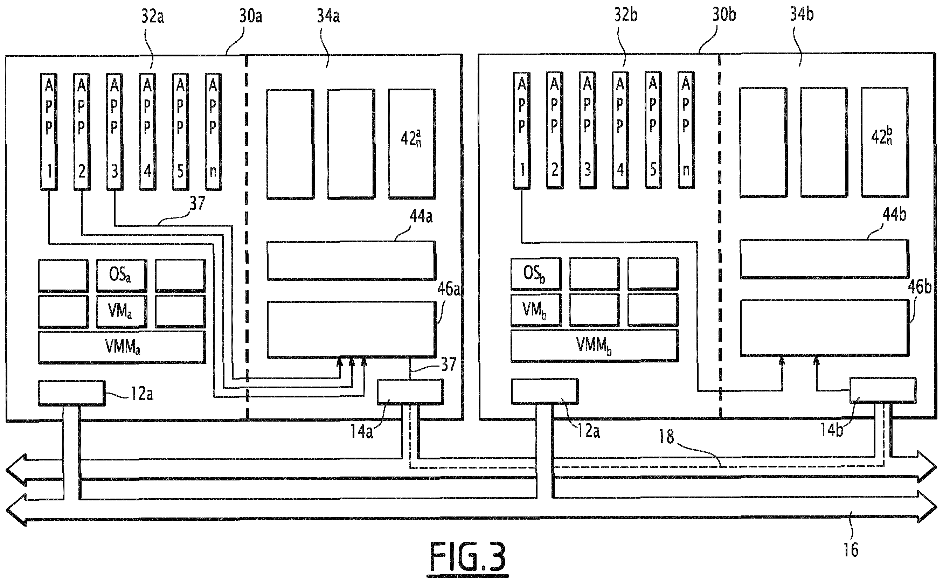

La figure 2 illustre un seul dispositif programmable, mais la figure 3 illustre deux dispositifs programmables interconnectés.

Le module de contrôle sécurisé 46 comprend un module 50 de réception et traitement des requêtes 33, 35 d'exécution sécurisée.

Par exemple, dans l'exemple de la figure 2, une première requête 33 est transmise, pour une exécution sécurisée de l'application APP₁ dans son environnement d'exécution sécurisé TEE₁, ainsi qu'une deuxième requête 35 pour une exécution sécurisée de l'application APP₂ dans son environnement d'exécution sécurisé TEE₂.

Le module de contrôle sécurisé 46 comprend également un module 52 apte à réaliser une sauvegarde, dans une zone de ressources mémoire partagées 60, d'un environnement d'exécution sécurisé TEEᵢ associé à une machine virtuelle VMᵢ.

De préférence, les données de l'environnement d'exécution sécurisé sont chiffrées avant sauvegarde.

Un module 54 d'allocation de portion matérielle sécurisée met en œuvre l'allocation, à l'exécution sécurisée d'une application APPₖ dans un environnement TEEᵢ, d'au moins une portion matérielle sécurisée disponible appartenant à l'un des processeurs de l'ensemble de dispositifs programmables interconnectés.

Un module 56 dit d'aseptisation effectue le nettoyage, en particulier la mise à zéro, des ressources matérielles de mémoire utilisées par la portion matérielle sécurisée pour l'exécution d'instructions de code, de manière à éviter toute possibilité de piratage due à des exécutions successives d'instructions de code en provenance de machines virtuelles distinctes. De plus, d'autres ressources matérielles, ou périphériques, utilisés pour l'exécution des instructions de l'application APPₖ sont également nettoyées pour éviter tout risque de piratage.

Un module 58 de chargement et d'exécution effectue le chargement en mémoire vive RAM de l'environnement d'exécution sécurisé TEEᵢ correspondant à la requête d'exécution reçue, et l'exécution sécurisée de l'application APPₖ.

De préférence, les ressources matérielles de la portion matérielle sécurisée 34 sélectionnée sont utilisées de manière exclusive pour l'exécution d'une application donnée à un instant donné.

La figure 3 illustre schématiquement une mise en œuvre de l'invention dans le contexte d'interconnexion de deux processeurs 30a, 30b de deux dispositifs programmables interconnectés. Pour simplifier la représentation, les ressources mémoire partagées n'ont pas été illustrées à nouveau dans la figure 3.

Chacun des processeurs 30a, 30b comprend des éléments analogues aux éléments précédemment décrits pour le processeur 30 de la figure 2.

Comme illustré à la figure 3, le module de contrôle sécurisé 46a est apte à transmettre une requête 37 d'exécution sécurisée, via le module d'interface réseau 14a, à un module de contrôle 46b d'un autre processeur, qui est apte à le recevoir via le module d'interface réseau 14b.

Dans l'exemple, la requête 37 est une instruction d'exécution sécurisée de l'application APP₃ dans un environnement d'exécution sécurisé TEE₃ associé.

L'environnement d'exécution sécurisé TEE₃ est déchiffré, chargé et exécuté par la portion matérielle sécurisée 34b.

Les modules de contrôle sécurisé 46a, 46b mettent en œuvre des mécanismes d'adressage et de routage des requêtes d'exécution sécurisée, chaque requête d'exécution sécurisée étant transmise par une machine virtuelle exécutée par une portion matérielle 32a, 32b de niveau de sécurité standard.

Ainsi, les modules de contrôle sécurisé respectifs 46a, 46b tels qu'ils sont fournis par les fabricants de processeurs sont modifiés pour permettre un traitement des requêtes 37 comprenant des instructions d'exécution par une portion matérielle sécurisée à distance. Par conséquent, un fonctionnement distribué est obtenu.

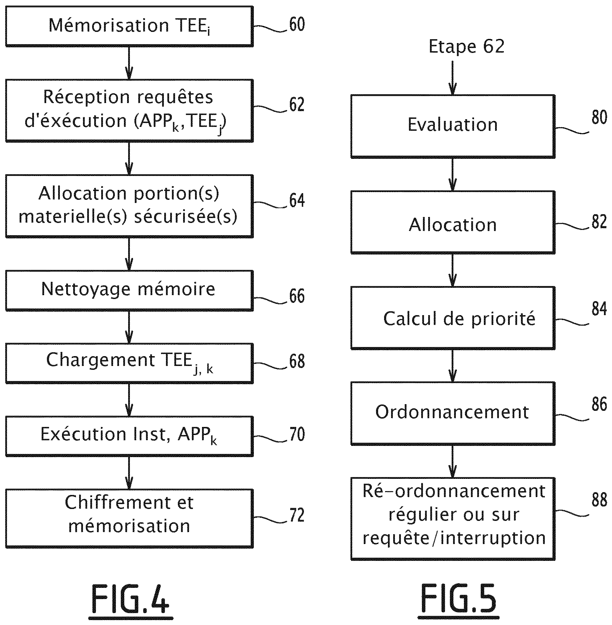

La figure 4 est un organigramme des principales étapes d'un procédé d'exécution de machines virtuelles par un ensemble de dispositifs programmables interconnectés selon un mode de réalisation de l'invention.

Dans ce mode de réalisation, le procédé comprend une première étape 60 de mémorisation d'au moins un environnement d'exécution sécurisé, noté TEEᵢ, pour chaque machine virtuelle VMᵢ s'exécutant sur une des portions matérielles standard de l'ensemble de dispositifs programmables du système.

Comme mentionné ci-dessus, chaque TEEᵢ comprend un système d'exploitation sécurisé et un contexte d'exécution d'au moins une application.

Les TEEᵢ sont mémorisés, de préférence sous forme chiffrée, dans des ressources mémoire partagées par l'ensemble des processeurs interconnectés du système.

De préférence, seuls les modules de contrôle sécurisés ont accès à ces ressources mémoire partagées formant un espace de sauvegarde.

Une association entre chaque environnement d'exécution sécurisé et la machine virtuelle et l'application à exécuter est mémorisée également.

Lors de la réception 62 d'au moins une requête d'exécution sécurisée d'au moins une instruction *Inst* d'une application APPₖ par une machine virtuelle requérante VMⱼ, une étape 64 d'allocation d'au moins une portion matérielle sécurisée disponible appartenant à l'un des processeurs de l'ensemble de dispositifs programmables interconnectés est mise en œuvre.

Plusieurs modes de réalisation de cette étape d'allocation sont envisagés et détaillés ci-après.

Après l'étape d'allocation 64, une étape de nettoyage 66 des ressources mémoire et autres périphériques utilisés par la portion matérielle sécurisée allouée est mise en œuvre, afin d'augmenter la sécurité d'exécution de l'application à exécuter et des applications précédemment exécutées. De tels autres périphériques incluent par exemple des ressources réseaux et des accélérateurs cryptographiques.

En particulier, un effacement des ressources mémoire est mise en œuvre lors de l'étape 66 lorsque la portion matérielle sécurisée est déjà allouée à un TEE_{f}. Cette étape est précédée d'une sauvegarde chiffrée du contexte TEE_{f}, comme expliqué ci-après.

L'étape de nettoyage est suivie d'une étape 68 de chargement en mémoire de l'environnement d'exécution sécurisé TEE_{j,k} préalablement mémorisé, pour la machine virtuelle VMⱼ et le contexte d'exécution de l'application APPₖ. Lorsque les environnements d'exécution sécurisés sont sauvegardés sous forme chiffrée, un déchiffrement est appliqué avant chargement.

L'étape de chargement 68 est suivie d'une étape 70 d'exécution sécurisée de l'instruction *Inst* de l'application APPₖ dans le TEE_{j,k}.

Il est à noter que dans une variante, plusieurs portions matérielles sécurisées sont allouées pour l'exécution de l'application APPₖ, comme cela serait, optionnellement, le cas si l'application s'exécutait en mode sécurisé sur un processeur à plusieurs cœurs.

Egalement, il est habituel d'allouer un ensemble de ressources mémoire, par exemple des mémoires tampon (ou « buffers » en anglais), pour les exécutions mises en œuvre en mode matériel sécurisé qui serviront à communiquer avec la machine virtuelle cliente de ce TEE. C'est de cette façon que les applications sécurisées rendent des résultats aux applications standard.

Les mémoires tampon partagées sont accessibles à la fois par le mode normal et par le mode sécurisé, mais avec des droits d'accès de lecture et d'écriture différents. Lorsque les données, par exemple les TEE, sont sauvegardées sous forme chiffrée, elles peuvent être stockées dans des zones mémoire accessibles par le monde normal, de niveau de sécurité standard.

Lorsqu'une de ces mémoires tampon partagées est modifiée par l'exécution de l'application APPₖ, modifiant par conséquent le contexte associé à l'environnement d'exécution sécurisé TEE_{j,k}, le contexte de la machine virtuelle VMⱼ 'cliente' sera modifiée en conséquence pour permettre le partage qui aurait eu lieu si le TEE était resté dans le même processeur, en mode synchrone ou asynchrone (option à choisir par le firmware).

Une fois l'exécution terminée, une étape 72 de chiffrement et de mémorisation de l'environnement d'exécution sécurisé chiffré est mise en œuvre.

La figure 5 est un organigramme d'un mode de réalisation de l'étape 64 d'allocation d'une ou plusieurs portions matérielles sécurisées pour l'exécution sécurisée et distribuée d'applications de machines virtuelles.

Dans ce mode de réalisation, après réception d'une requête d'exécution sécurisée d'au moins une instruction ou suite d'instructions *Inst* d'une application APPₖ par une machine virtuelle requérante VMⱼ, on met en œuvre une étape 80 d'évaluation de ressources matérielles nécessaires pour l'environnement d'exécution sécurisé TEEⱼ associé à ladite machine virtuelle requérante VMⱼ. En particulier, on évalue la complexité de calcul et/ou la quantité de mémoire et/ou le nombre de cœurs d'exécution nécessaires à ladite exécution sécurisée.

L'étape 80 est suivie d'une étape 82 d'allocation d'un nombre de portions matérielles sécurisées et de ressources mémoire associées pour l'exécution d'une instruction ou suite d'instructions *Inst* d'une application APPₖ par une machine virtuelle requérante VMⱼ.

L'étape 82 est suivie d'une étape 84 de calcul de priorité de séquencement d'exécution par les micrologiciels interconnectés des requêtes d'exécution à effectuer.

En variante, l'étape 84 de calcul de priorité est effectuée avant l'étape 82 d'allocation de portions matérielles sécurisées, de sorte que les priorités calculées s'appliquent également à l'étape d'allocation.

Dans le cas d'une pluralité de requêtes d'exécution en provenance d'une pluralité de machines virtuelles requérantes, reçues sensiblement en parallèle, l'étape 84 est suivie d'une étape 86 de mise en œuvre distribuée d'un algorithme d'ordonnancement pour l'utilisation des portions matérielles sécurisées par les environnements d'exécution sécurisés TEEi associés aux machines virtuelles requérantes.

Le nombre de TEEᵢ et leurs besoins en cœurs d'exécution est, dans certains cas, supérieur aux ressources d'exécution matérielle sécurisées disponibles.

Divers mécanismes d'ordonnancement distribué sont connus, et applicables aisément par un homme du métier pour l'ordonnancement et la répartition des TEEᵢ sur des portions matérielles sécurisées.

Par exemple, des mécanismes de tourniquet ou round-robin, ou un mécanisme BVT (pour « borrowed virtual time ») peuvent être appliqués.

A des intervalles réguliers ou sur requête ou à l'occasion d'événements ou interruptions, un ré-ordonnancement 88 est mis en œuvre, permettant de ré-affecter des TEEᵢ à d'autres portions matérielles sécurisées.

De préférence, la collaboration entre les micrologiciels de pilotage des portions matérielle sécurisés des dispositifs programmables, que ce soit pour l'ordonnancement ou la gestion des évènements d'un environnement d'exécution sécurisé, est organisée par un mécanisme simplifié de DHT (pour « Distributed Hash Table ») pour le partage distribué des informations d'allocations des portions matérielles sécurisées, des évènements ou du temps CPU alloué à chacun des TEEᵢ, ou , comme Chord ou Kademlia.

Une méthode d'ordonnancement collaborative pourra être choisie parmi celles citées dans la publication « Scheduling in Distributed Systems », de Dongning Liang et al, accessible sur Internet à l'adresse suivante : http://cseweb.ucsd.edu/classes/sp99/cse221/projects/Scheduling.pdf

Dans une autre variante moins avantageuse du point de vue de la sécurité et de la performance, l'invention peut ne comporter qu'un seul réseau partagé entre chaque processeur. Dans ce cas, les micrologiciels de pilotage communiquent de manière chiffrée par exemple en VPN en utilisant le réseau du monde non sécurisé.

## Revendications

1. Procédé d'exécution sécurisée de machines virtuelles par un ensemble de dispositifs programmables interconnectés, chaque dispositif programmable comportant au moins un processeur de calcul comportant un ou plusieurs cœurs, chaque dispositif programmable étant apte à exécuter simultanément et/ou successivement des applications d'une pluralité de machines virtuelles, chaque processeur comportant une portion matérielle d'exécution de niveau de sécurité standard et une portion matérielle sécurisée de niveau de sécurité supérieur au niveau de sécurité standard, lesdites portions matérielles étant cloisonnées,
le procédé comportant des étapes de:
- mémorisation (60) d'au moins un environnement d'exécution sécurisé , TEEi, associé à chaque machine virtuelle, chaque environnement d'exécution sécurisé comportant au moins une instruction d'une application associée,
- sur requête d'exécution sécurisée d'au moins une suite d'instructions d'une application par une machine virtuelle requérante, la machine virtuelle requérante étant implémentée sur une portion matérielle (32, 32a) d'exécution de niveau de sécurité standard d'un processeur, ladite requête étant transmise à un module de contrôle sécurisé (46, 46a) implémenté dans la portion matérielle sécurisée (34, 34a) dudit processeur (30, 30a),
• allocation (64) à ladite exécution sécurisée d'au moins une portion matérielle sécurisée disponible appartenant à l'un des processeurs de l'ensemble de dispositifs programmables interconnectés, comportant une transmission de ladite requête d'exécution sécurisée, par ledit module de contrôle sécurisé (46, 46a) à un autre module de contrôle sécurisé (46b) implémenté dans la portion matérielle sécurisée (34b) d'un autre processeur (30b) de l'ensemble de dispositifs programmables interconnectés, chacun desdits modules de contrôle sécurisé (46, 46a, 46b) mettant en œuvre des mécanismes d'adressage et de routage des requêtes d'exécution sécurisée,
• chargement (68) de l'environnement d'exécution sécurisé , TEEj, associé à ladite machine virtuelle requérante dans ladite au moins une portion matérielle sécurisée allouée,
• utilisation (70) de la portion matérielle sécurisée allouée pour l'exécution sécurisée de ladite suite d'instructions de l'application de la machine virtuelle requérante,
l'utilisation d'une portion matérielle sécurisée allouée pour l'exécution sécurisée d'au moins une instruction de l'application d'une première machine virtuelle requérante étant exclusive, à un instant donné, de toute utilisation de ladite portion matérielle sécurisée pour l'exécution sécurisée d'au moins une instruction de l'application d'une deuxième machine virtuelle requérante.

2. Procédé selon la revendication 1, dans lequel la portion matérielle sécurisée comprend des ressources mémoire, le procédé comportant, avant le chargement de l'environnement d'exécution sécurisé, une étape de nettoyage (66) desdites ressources mémoire.

3. Procédé selon la revendication 2, dans lequel la portion matérielle sécurisée comprend au moins un périphérique, le procédé comportant, avant le chargement de l'environnement d'exécution sécurisé, une étape de nettoyage (66) de chaque périphérique.

4. Procédé selon l'une quelconque des revendications 1 à 3, comprenant en outre un chiffrement (72) de l'environnement d'exécution sécurisé après l'exécution sécurisée de ladite suite d'instructions de l'application de la machine virtuelle requérante, et une mémorisation (72) de l'environnement d'exécution sécurisé chiffré.

5. Procédé selon l'une quelconque des revendications 1 à 4, dans lequel, après la requête d'exécution sécurisée d'au moins une suite d'instructions d'une application, le procédé comprend au moins une étape d'évaluation (80) de ressources matérielles nécessaires pour l'environnement d'exécution sécurisé associé à ladite machine virtuelle requérante, et de calcul d'un nombre de portions matérielles sécurisées à allouer pour l'exécution de l'application sécurisée dans l'environnement d'exécution sécurisé associé.

6. Procédé selon l'une quelconque des revendications 1 à 5, dans lequel, après la requête d'exécution sécurisée d'au moins une suite d'instructions d'une application, le procédé comprend une étape de calcul d'une priorité (84) de séquencement d'exécution sécurisée des requêtes d'exécution.

7. Procédé selon la revendication 5, dans lequel l'évaluation de ressources matérielles comprend une évaluation de complexité de calcul et/ou de quantité de mémoire et/ou de nombre de cœurs d'exécution.

8. Procédé selon l'une quelconque des revendications 1 à 7, comprenant, pour une pluralité de requêtes d'exécution en provenance d'une pluralité de machines virtuelles requérantes, une mise en œuvre distribuée (86) d'un algorithme d'ordonnancement pour l'utilisation de groupes de portions matérielles sécurisées par les environnements d'exécution sécurisés associés aux machines virtuelles requérantes.

9. Système d'exécution sécurisée de machines virtuelles par un ensemble de dispositifs programmables interconnectés, chaque dispositif programmable comportant au moins un processeur de calcul comportant un ou plusieurs cœurs, chaque dispositif programmable étant apte à exécuter simultanément et/ou successivement des applications d'une pluralité de machines virtuelles,
chaque processeur comportant une portion matérielle d'exécution de niveau de sécurité standard et une portion matérielle sécurisée de niveau de sécurité supérieur au niveau de sécurité standard, lesdites portions matérielles étant cloisonnées,
chaque processeur étant adapté à:
- mémoriser (52) un environnement d'exécution sécurisé , TEEi, associé à chaque machine virtuelle, chaque environnement d'exécution sécurisé comportant au moins une instruction d'une application associée,
- sur requête d'exécution sécurisée d'au moins une suite d'instructions d'une application par une machine virtuelle requérante, la machine virtuelle requérante étant implémentée sur une portion matérielle (32, 32a) d'exécution de niveau de sécurité standard d'un processeur (30, 30a), ladite requête étant transmise à un module de contrôle sécurisé (46, 46a) implémenté dans la portion matérielle sécurisée (34, 34a) dudit processeur,
• allouer (54) à ladite exécution sécurisée au moins une portion matérielle sécurisée disponible appartenant à l'un des processeurs de l'ensemble de dispositifs programmables interconnectés, comportant une transmission de ladite requête d'exécution sécurisée, par ledit module de contrôle sécurisé (46, 46a), à un autre module de contrôle sécurisé (46b) implémenté dans la portion matérielle sécurisée (34b) d'un autre processeur de l'ensemble de dispositifs programmables interconnectés, chacun desdits modules de contrôle sécurisé (46, 46a, 46b) mettant en œuvre des mécanismes d'adressage et de routage des requêtes d'exécution sécurisée,
• charger (58) l'environnement d'exécution sécurisé , TEEj, associé à ladite machine virtuelle requérante dans ladite au moins une portion matérielle sécurisée allouée,
• utiliser (58) la portion matérielle sécurisée allouée pour l'exécution sécurisée de ladite suite d'instructions de l'application de la machine virtuelle requérante,
l'utilisation d'une portion matérielle sécurisée allouée pour l'exécution sécurisée d'au moins une instruction de l'application d'une première machine virtuelle requérante étant exclusive, à un instant donné, de toute utilisation de ladite portion matérielle sécurisée pour l'exécution sécurisée d'au moins une instruction de l'application d'une deuxième machine virtuelle requérante.
• .

10. Système d'exécution sécurisée de machines virtuelles selon la revendication 9, comportant des ressources mémoire partagées, le système comportant un module de chiffrement apte à chiffrer l'environnement d'exécution sécurisé après l'exécution sécurisée de ladite au moins une instruction de l'application de la machine virtuelle requérante, et à sauvegarder l'environnement d'exécution sécurisé chiffré dans les ressources mémoire partagées.

11. Produit programme d'ordinateur comportant des instructions de micrologiciel qui, lorsqu'elles sont mises en œuvre par un ou plusieurs processeurs de calcul de dispositifs programmables, chaque processeur de calcul comportant un ou plusieurs cœurs, chaque dispositif programmable étant apte à exécuter simultanément et/ou successivement des applications d'une pluralité de machines virtuelles, chaque processeur comportant une portion matérielle d'exécution de niveau de sécurité standard et une portion matérielle sécurisée de niveau de sécurité supérieur au niveau de sécurité standard, lesdites portions matérielles étant cloisonnées, mettent en œuvre un procédé selon l'une quelconque des revendications 1 à 8.

## Patentansprüche

1. Verfahren zur gesicherten Ausführung von virtuellen Maschinen durch eine Gruppe von miteinander verbundenen programmierbaren Vorrichtungen, jede programmierbare Vorrichtung umfassend mindestens einen Rechenprozessor, umfassend einen oder mehrere Kerne, wobei jede programmierbare Vorrichtung in der Lage ist, gleichzeitig und/oder nacheinander Anwendungen einer Vielzahl von virtuellen Maschinen auszuführen, wobei jeder Prozessor einen Ausführungs-Hardwareabschnitt mit Standard-Sicherheitsniveau und einen gesicherten Hardwareabschnitt mit einem höheren Sicherheitsniveau als das Standard-Sicherheitsniveau umfasst, wobei die Hardwareabschnitte voneinander getrennt sind,
das Verfahren umfassend die folgenden Schritte:
- Speichern (60) mindestens einer gesicherten Ausführungsumgebung, TEEi, die mit jeder virtuellen Maschine assoziiert ist, jede gesicherte Ausführungsumgebung umfassend mindestens eine Anweisung einer assoziierten Anwendung,
- auf eine Anfrage zur gesicherten Ausführung mindestens einer Anwendungsabfolge einer Anwendung durch eine anfordernde virtuelle Maschine, wobei die anfordernde virtuelle Maschine auf einem Ausführungs-Hardwareabschnitt (32, 32a) mit Standard-Sicherheitsniveau eines Prozessors implementiert ist, wobei die Anfrage an ein gesichertes Steuermodul (46, 46a) übermittelt wird, das in dem gesicherten Hardwareabschnitt (34, 34a) des Prozessors (30, 30a) implementiert ist,
• Zuweisen (64) zu der gesicherten Ausführung von mindestens einem verfügbaren gesicherten Hardwareabschnitt, der zu einem der Prozessoren des Satzes von miteinander verbundenen programmierbaren Vorrichtungen gehört, umfassend eine Übertragung der Anforderung der gesicherten Ausführung durch das gesicherte Steuermodul (46, 46a) an ein anderes gesichertes Steuermodul (46b), das in dem gesicherten Hardwareabschnitt (34b) eines anderen Prozessors (30b) der Gesamtheit der miteinander verbundenen programmierbaren Vorrichtungen implementiert ist, wobei jedes der gesicherten Steuermodule (46, 46a, 46b) Mechanismen zum Adressieren und Weiterleiten der Anforderungen zur gesicherten Ausführung implementiert,
• Laden (68) der gesicherten Ausführungsumgebung, TEEj, die mit der anfordernden virtuellen Maschine assoziiert ist, in den mindestens einen zugewiesenen gesicherten Hardwareabschnitt,
• Verwenden (70) des zugewiesenen gesicherten Hardwareabschnitts für die gesicherte Ausführung der Anweisungsabfolge der Anwendung der anfordernden virtuellen Maschine,
wobei die Verwendung eines gesicherten Hardwareabschnitts, der für die gesicherte Ausführung von mindestens einer Anweisung der Anwendung einer ersten anfordernden virtuellen Maschine zugewiesen wurde, zu einem gegebenen Zeitpunkt exklusiv für jede Verwendung des gesicherten Hardwareabschnitts für die gesicherte Ausführung von mindestens einer Anweisung der Anwendung einer zweiten anfordernden virtuellen Maschine ist.

2. Verfahren nach Anspruch 1, wobei der gesicherte Hardwareabschnitt Speicherressourcen umfasst, wobei das Verfahren vor dem Laden der gesicherten Ausführungsumgebung einen Reinigungsschritt (66) der Speicherressourcen umfasst.

3. Verfahren nach Anspruch 2, wobei der gesicherte Hardwareabschnitt mindestens ein Peripheriegerät umfasst, wobei das Verfahren vor dem Laden der gesicherten Ausführungsumgebung einen Reinigungsschritt (66) für jedes Peripheriegerät umfasst.

4. Verfahren nach einem der Ansprüche 1 bis 3, ferner umfassend ein Verschlüsseln (72) der gesicherten Ausführungsumgebung nach der gesicherten Ausführung der Anweisungsabfolge der Anwendung der anfordernden virtuellen Maschine, und ein Speichern (72) der verschlüsselten gesicherten Ausführungsumgebung.

5. Verfahren nach einem der Ansprüche 1 bis 4, wobei das Verfahren nach der Anforderung der gesicherten Ausführung mindestens einer Anweisungsabfolge einer Anwendung mindestens einen Schritt eines Bewertens (80) von Hardware-Ressourcen umfasst, die für die gesicherte Ausführungsumgebung erforderlich sind, die mit der anfordernden virtuellen Maschine assoziiert ist, und eines Berechnens einer Anzahl von gesicherten Hardwareabschnitten, die für die Ausführung der gesicherten Anwendung in der assoziierten gesicherten Ausführungsumgebung zuzuweisen sind.

6. Verfahren nach einem der Ansprüche 1 bis 5, wobei das Verfahren nach der Anforderung einer gesicherten Ausführung von mindestens einer Anweisungsabfolge einer Anwendung einen Schritt eines Berechnens einer Priorität (84) der Reihenfolge der gesicherten Ausführung der Ausführungsanforderungen umfasst.

7. Verfahren nach Anspruch 5, wobei das Bewerten der Hardware-Ressourcen ein Bewerten der Berechnungskomplexität und/oder der Speichermenge und/oder der Anzahl der Ausführungskerne umfasst.

8. Verfahren nach einem der Ansprüche 1 bis 7, umfassend, für eine Vielzahl von Ausführungsanforderungen von einer Vielzahl von anfordernden virtuellen Maschinen ein verteiltes Implementieren (86) eines Planungs-Algorithmus für die Verwendung von Gruppen von gesicherten Hardwareabschnitten durch die gesicherten Ausführungsumgebungen umfasst, die mit den anfragenden virtuellen Maschinen assoziiert sind.

9. Verfahren zur gesicherten Ausführung von virtuellen Maschinen durch eine Gruppe von miteinander verbundenen programmierbaren Vorrichtungen, jede programmierbare Vorrichtung umfassend mindestens einen Rechenprozessor, umfassend einen oder mehrere Kerne, wobei jede programmierbare Vorrichtung in der Lage ist, gleichzeitig und/oder nacheinander Anwendungen einer Vielzahl von virtuellen Maschinen auszuführen,
jeder Prozessor umfassend einen Ausführungs-Hardwareabschnitt mit Standard-Sicherheitsniveau und einen gesicherten Hardwareabschnitt mit einem höheren Sicherheitsniveau als das Standard-Sicherheitsniveau, wobei die Hardwareabschnitte voneinander getrennt sind,
wobei jeder Prozessor zu Folgendem angepasst ist:
- Speichern (52) einer gesicherten Ausführungsumgebung, TEEi, die mit jeder virtuellen Maschine assoziiert ist, jede gesicherte Ausführungsumgebung umfassend mindestens eine Anweisung einer assoziierten Anwendung,
- auf eine Anfrage zur gesicherten Ausführung mindestens einer Anwendungsabfolge einer Anwendung durch eine anfordernde virtuelle Maschine, wobei die anfordernde virtuelle Maschine auf einem Ausführungs-Hardwareabschnitt (32, 32a) mit Standard-Sicherheitsniveau eines Prozessors (30, 30a) implementiert ist, wobei die Anfrage an ein gesichertes Steuermodul (46, 46a) übermittelt wird, das in dem gesicherten Hardwareabschnitt (34, 34a) des Prozessors implementiert ist,
• Zuweisen (54) zu der gesicherten Ausführung von mindestens einem verfügbaren gesicherten Hardwareabschnitt, der zu einem der Prozessoren des Satzes von miteinander verbundenen programmierbaren Vorrichtungen gehört, umfassend eine Übertragung der Anforderung der gesicherten Ausführung durch das gesicherte Steuermodul (46, 46a) an ein anderes gesichertes Steuermodul (46b), das in dem gesicherten Hardwareabschnitt (34b) eines anderen Prozessors der Gesamtheit der miteinander verbundenen programmierbaren Vorrichtungen implementiert ist, wobei jedes der gesicherten Steuermodule (46, 46a, 46b) Mechanismen zum Adressieren und Weiterleiten der Anforderungen zur gesicherten Ausführung implementiert,
• Laden (58) der gesicherten Ausführungsumgebung, TEEj, die mit der anfordernden virtuellen Maschine assoziiert ist, in den mindestens einen zugewiesenen gesicherten Hardwareabschnitt,
• Verwenden (58) des zugewiesenen gesicherten Hardwareabschnitts für die gesicherte Ausführung der Anweisungsabfolge der Anwendung der anfordernden virtuellen Maschine,
wobei die Verwendung eines gesicherten Hardwareabschnitts, der für die gesicherte Ausführung von mindestens einer Anweisung der Anwendung einer ersten anfordernden virtuellen Maschine zugewiesen wurde, zu einem gegebenen Zeitpunkt exklusiv für jede Verwendung des gesicherten Hardwareabschnitts für die gesicherte Ausführung von mindestens einer Anweisung der Anwendung einer zweiten anfordernden virtuellen Maschine ist.

10. System zur gesicherten Ausführung von virtuellen Maschinen nach Anspruch 9, umfassend gemeinsam genutzte Speicherressourcen, das System umfassend ein Verschlüsselungsmodul, das in der Lage ist, die gesicherte Ausführungsumgebung nach der gesicherten Ausführung der mindestens eine Anweisung der Anwendung der anfordernden virtuellen Maschine zu verschlüsseln und die verschlüsselte gesicherte Ausführungsumgebung in den gemeinsam genutzten Speicherressourcen zu speichern.

11. Computerprogrammprodukt, umfassend Firmware-Anweisungen, die, wenn sie von einem oder mehreren Rechenprozessoren programmierbarer Vorrichtungen implementiert werden, wobei jeder Rechenprozessor einen oder mehrere Kerne umfasst, wobei jede programmierbare Vorrichtung gleichzeitig und/oder nacheinander Anwendungen einer Vielzahl von virtuellen Maschinen ausführen kann, jeder Prozessor einen ausführenden Hardwareabschnitt mit Standard-Sicherheitsniveau und einen gesicherten Hardwareabschnitt mit einem höheren Sicherheitsniveau als dem Standard-Sicherheitsniveau umfasst, wobei die Hardwareabschnitte voneinander getrennt sind, ein Verfahren nach einem der Ansprüche 1 bis 8 implementieren.

## Claims

1. A method for secure execution of virtual machines by a set of interconnected programmable devices, each programmable device including at least one computing processor having one or several cores, each programmable device being able to execute, simultaneously and/or successively, applications of a plurality of virtual machines, each processor including a hardware portion for standard security level execution and a secure hardware portion for a security level higher than the standard security level, said hardware portions being partitioned.
the method including the following steps:
- storing (60) at least one secure execution environment, TEEi, associated with each virtual machine, each secure execution environment including at least one instruction of an associated application,
- following a request for secure execution of at least one series of instructions of an application by a requesting virtual machine, the requesting virtual machine being implemented on a standard security level hardware portion (32, 32a) of a processor, said request being transmitted to a secure control module (46, 46a) implemented in the secure hardware portion (34, 34a) of said processor (30, 30a),
• allocating (64) said secure execution at least one available secure hardware portion belonging to one of the processors of the set of interconnected programmable devices, comprising transmitting said request for secure execution, by said secure control module (46, 46a) to another secure control module (46b) implemented in the secure hardware portion (34b) of another processor (30b) of the set of interconnected programmable devices, each of said secure control modules (46, 46a, 46b) implementing addressing and routing mechanisms for the secure execution requests,
• loading (68) the secure execution environment, TEEj, associated with said requesting virtual machine in said at least one allocated secure hardware portion,
• using (70) the allocated secure hardware portion for the secure execution of said sequence of instructions of the application of the requesting virtual machine,
the use of a secure hardware portion allocated for the secure execution of at least one instruction of the application of a first requesting virtual machine is exclusive, at a given moment, of any use of said secure hardware portion for the secure execution of at least one instruction of the application of a second requesting virtual machine.

2. The method according to claim 1, wherein the secure hardware portion comprises memory resources and the method includes, before loading the secure execution environment, a step for cleaning (66) said memory resources.

3. The method according to claim 2, wherein the secure hardware portion comprises at least one peripheral, the method including, before loading the secure execution environment, a step for cleaning (66) each peripheral.

4. The method according to any one of claims 1 to 3, further comprising an encryption (72) of the secure execution environment after the secure execution of said sequence of instructions of the application of the requesting virtual machine, and storing (72) of the encrypted secure execution environment.

5. The method according to any one of claims 1 to 4, wherein, after the secure execution request for at least one sequence of instructions of an application, the method comprises at least one step for evaluating (80) necessary hardware resources for the secure execution environment associated with said requesting virtual machine, and computing a number of secure hardware portions to be allocated for the execution of the secure application in the associated secure execution environment.

6. The method according to any one of claims 1 to 5, wherein, following a request for secure execution of at least one sequence of instructions of an application, the method comprises a step for computing (84) a secure execution sequencing priority of the execution requests.

7. The method according to claim 5, wherein the evaluation of hardware resources comprises an evaluation of computing complexity and/or quantity of memory and/or number of execution cores.

8. The method according to any one of claims 1 to 7, comprising, for a plurality of execution requests from a plurality of requesting virtual machines, a distributed implementation (86) of a sequencing algorithm for the use of groups of secure hardware portions by the secure execution environments associated with the requesting virtual machines.

9. A system for secure execution of virtual machines by a set of interconnected programmable devices, each programmable device including at least one computing processor having one or several cores, each programmable device being able to execute, simultaneously and/or successively, applications of a plurality of virtual machines,
each processor including a hardware portion for standard security level execution and a secure hardware portion for a security level higher than the standard security level, said hardware portions being partitioned,
each processor being suitable for:
- storing (52) a secure execution environment, TEEi,t associated with each virtual machine, each secure execution environment including at least one instruction of an associated application,
- following a request for secure execution of at least one series of instructions of an application by a requesting virtual machine, the requesting virtual machine being implemented on a standard security level hardware portion (32, 32a) of a processor, said request being transmitted to a secure control module (46, 46a) implemented in the secure hardware portion (34, 34a) of said processor,
• allocating (54) said secure execution at least one available secure hardware portion belonging to one of the processors of the set of interconnected programmable devices, comprising transmitting said request for secure execution, by said secure control module (46, 46a) to another secure control module (46b) implemented in the secure hardware portion (34b) of another processor (30b) of the set of interconnected programmable devices, each of said secure control modules (46, 46a, 46b) implementing addressing and routing mechanisms for the secure execution requests,
• loading (58) the secure execution environment, TEEi, associated with said requesting virtual machine in said at least one allocated secure hardware portion,
• using (58) the allocated secure hardware portion for the secure execution of said sequence of instructions of the application of the requesting virtual machine,
the use of a secure hardware portion allocated for the secure execution of at least one instruction of the application of a first requesting virtual machine is exclusive, at a given moment, of any use of said secure hardware portion for the secure execution of at least one instruction of the application of a second requesting virtual machine.

10. The system for secure execution of virtual machines according to claim 9, including shared memory resources, the system including an encryption module able to encrypt the secure execution environment after the secure execution of said at least one instruction of the application of the requesting virtual machine, and to save the encrypted secure execution environment in the shared memory resources.

11. A computer program product including firmware instructions which, when implemented by one or several computing processors of programmable devices, each computing processor having one or several cores, each programmable device being able to execute, simultaneously and/or successively, applications of a plurality of virtual machines, each processor including a hardware portion for standard security level execution and a secure hardware portion for a security level higher than the standard security level, said hardware portions being partitioned, carry out a method according to any one of claims 1 to 8.
